# EUROPÄISCHE PATENTSCHRIFT

(11) **EP 4 577 486 B1**
(45) Veröffentlichungstag und Bekanntmachung des Hinweises auf die Patenterteilung: **05.08.2026**
(21) Anmeldenummer: 23787118.1
(22) Anmeldetag: 11.10.2023
(51) Int. Cl.: B66C 15/04

(54) **ANTI-KOLLISIONSEINRICHTUNG FÜR BAUMASCHINEN SOWIE VERFAHREN ZUM BETREIBEN MEHRERER BAUMASCHINEN**
ANTI-COLLISION DEVICE FOR CONSTRUCTION MACHINES AND METHOD FOR OPERATING SEVERAL CONSTRUCTION MACHINES
DISPOSITIF ANTI-COLLISION POUR ENGINS DE CHANTIER ET PROCÉDÉ DE FONCTIONNEMENT DE PLUSIEURS ENGINS DE CHANTIER

(30) Priorität: 14.10.2022 DE 102022126938
(43) Veröffentlichungstag der Anmeldung: 02.07.2025
(73) Patentinhaber: Liebherr-Werk Biberach GmbH, 88400 Biberach an der Riss (DE)
(72) Erfinder: BRAMBERGER, Robert, 88416 Reinstetten (DE); MORATH, Matthias, 88400 Biberach (DE); HÖRDEMANN, Christian, 52134 Herzogenrath (DE)
(74) Vertreter: Lorenz Seidler Gossel Part. mbB
(86) Internationale Anmeldenummer: PCT/EP2023/078178
(87) Internationale Veröffentlichungsnummer: WO 2024/079182

(56) Entgegenhaltungen:
- CN-A- 114 368 698
- US-A1- 2015 161 872
- HOSSAIN IQBAL ET AL: "Distance Measurement Using Ultra Wideband", 4 September 2013 (2013-09-04), pages 66 - 68, XP093113419, Retrieved from the Internet <URL:https://www.diva-portal.org/smash/get/diva2:645575/FULLTEXT01.pdf> [retrieved on 20231218]

## Beschreibung

Die vorliegende Erfindung betrifft ein Verfahren zum Betreiben mehrerer Baumaschinen, insbesondere von Kranen, deren Bewegungen von einer Anti-Kollisionseinrichtung auf drohende Kollisionen überwacht werden. Die Erfindung betrifft ferner auch eine Anti-Kollisionseinrichtung zum Überwachen und Vermeiden drohender Kollisionen zweier Baumaschinen.

Auf Baustellen werden regelmäßig mehrere Baumaschinen gleichzeitig eingesetzt, darunter auch oft mehrere Krane, deren üblicherweise kreisförmige Arbeitsbereiche sich partiell überlappen, was einerseits durch die räumlichen Gegebenheiten der Baustelle bedingt sein kann, andererseits aber auch notwendig ist, um trotz kreisförmiger Arbeitsbereiche eine möglichst vollständige Abdeckung der Baustellenfläche zu erzielen. Um im Bereich der partiellen Überlappung der Arbeitsbereiche Kollisionen zwischen den Kranen, insbesondere deren Auslegern, zu verhindern, werden die Krane üblicherweise mit Anti-Kollisionseinrichtungen ausgerüstet, die Kranbewegungen überwachen und im kollisionsgefährdeten Arbeitsbereich, d.h. im vorgenannten Überlappungsbereich, in die Kransteuerung eingreifen, um Bewegungen zu verlangsamen oder zu stoppen oder zumindest ein Warnsignal abgeben, wenn eine Kollision droht.

Ähnliche Kollisionsproblematiken können auch mit anderen Baumaschinen auf der Baustelle auftreten, beispielsweise mit einem Seilbagger, der mit seinem Ausleger und der daran aufgeseilten Baggerschaufel typischerweise in einem Kreissektor hin und her schwenkt und von Zeit zu Zeit auch auf der Baustelle verfahren wird, um den Grabplatz zu wechseln. Je nach Baustelle können auch Kollisionen mit anderen Baumaschinen wie Rohrlegern, Radladern, Planierraupen oder den Auslegern von Betonpumpen drohen.

Die genannten Anti-Kollisionseinrichtungen können hierbei über eine geeignete Sensorik die Stellung bzw. Position und Bewegung des eigenen Krans bestimmen, beispielsweise durch einen Drehgeber am Drehwerk die Ausrichtung des Auslegers um die aufrechte Drehachse, durch einen Wippsensor die Wippstellung des Auslegers oder durch einen Laufkatzensensor die Stellung der Laufkatze am Ausleger und damit die Ausladung des Hubseils. Anhand festlegbarer Kollisionsbereiche weiß die Anti-Kollisionseinrichtung anhand der sensorisch erfassten Kranposition, wann sich der Kran in dem zuvor genannten Überlappungsbereich bewegt, der das Risiko einer Kollision mit einem anderen Kran birgt.

Andererseits können die Anti-Kollisionseinrichtungen der Krane bzw. Baumaschinen auch miteinander kommunizieren, so dass eine jeweilige Anti-Kollisionseinrichtung weiß, ob sich der andere Kran bzw. die andere Baumaschine ebenfalls in dem Überlappungsbereich bewegt bzw. darauf zusteuert. Die Anti-Kollisionseinrichtungen übermitteln hierzu die jeweils sensorisch oder in anderer Weise bestimmte Positions- und/oder Zustandsdaten "ihrer" Baumaschine an die Anti-Kollisionseinrichtung der "anderen" Baumaschinen, so dass die Anti-Kollisionseinrichtung einer jeweiligen Baumaschine die Positions- und/oder Zustandsdaten der anderen Baumaschinen berücksichtigen kann, wenn es um die Entscheidung geht, ob in die Kransteuerung eingegriffen und eine jeweilige Kranbewegung beeinflusst, insbesondere gestoppt werden oder zumindest ein Warnsignal abgegeben werden soll.

Eine solche Anti-Kollisionseinrichtung beschreibt beispielsweise die Schrift DE 24 41 785 A1, die zur Erfassung der Abstände der Kranausleger mehrerer Krane voneinander diese Abstände der Kranausleger als Vektoren darstellt und aus der Differenz der Vektoren zueinander den Abstand zwischen den auf die horizontal projizierten Auslegerspitzen bzw. Auslegerteilstücken ermittelt.

Aus der Schrift EP 18 94 882 B1 ist ferner eine Anti-Kollisionseinrichtung für Krane bekannt, die an sich in ähnlicher Weise Bewegungsvektoren bestimmt, diese allerdings nicht als Ist-Wert bestimmt, sondern vorausschauend abschätzt, um frühzeitig in kollisionsgefährliche Bewegungen eingreifen zu können.

Das Einrichten der Anti-Kollisionseinrichtungen solcher Krane und ähnlicher Baumaschinen ist bislang relativ aufwändig und fehleranfällig, wenn nicht mit der erforderlichen Sorgfalt gearbeitet wird. Üblicherweise wird dabei mittels Laser-Messgeräten die Entfernung der Krane voneinander, genauer gesagt die Beabstandung der Kranzentren bspw. in Form der Turmspitzen von Turmdrehkranen bestimmt. Die Ausrichtung der Krane zueinander, insbesondere die Ausrichtung der Ausleger zueinander, muss dabei zusätzlich bestimmt werden, was üblicherweise manuell erfolgt, indem die Krane manuell in eine bestimmte Relativstellung gebracht werden und die entsprechenden Werte vom Sensor des Anti-Kollisionssystems übernommen werden. Insgesamt ergibt sich hierdurch ein beträchtlicher Installationsaufwand, wobei sich auch sicherheitsrelevante Fehler ergeben können, wenn die Messungen bzw. die manuelle Ausrichtungsbestimmung nicht sorgfältig von einer erfahrenen Kraft durchgeführt werden.

Um das Einmessen zu vereinfachen, schlägt die Schrift DE 10 2018 129 227 A1 vor, der Anti-Kollisionseinrichtung die Kranposition und -ausrichtung mit Hilfe von Satellitennavigation und einer zusätzlichen Winkelsensorik automatisiert bereitzustellen, um manuelle Messungen möglichst zu vermeiden.

Die DE 10 2018 100 133 A1 beschreibt ferner eine Anti-Kollisionseinrichtung für Krane, die bei einer drohenden Kollision eine Fernsteuerverbindung aufbaut, um von einem aktiven Kran aus einen im Kollisionsbereich abgestellten, außer Betrieb befindlichen Kran "aufwecken" und aus dem Kollisionsbereich herausfahren zu können.

Aus der CN 114 368 698 A ist ferner eine Anti-Kollisionseinrichtung für einen Turmdrehkran bekannt, bei der mehrere Ultrabreitband-Tags entlang des Auslegers verteilt angeordnet sind, wobei der Abstand zu weiteren Ultrabreitband-Tags an einem anderen Kran anhand der Signalstärke bestimmt wird. Das Dokument CN 114 368 698 A offenbart den Oberbegriff der Ansprüche 1 und 7. Eine weitere Anti-Kollisionseinrichtung für Baumaschinen ist aus der Schrift US 2015 / 0 161 872 A1 bekannt.

Der vorliegenden Erfindung liegt hiervon ausgehend die Aufgabe zugrunde, eine verbesserte Anti-Kollisionseinrichtung, ein verbessertes Verfahren zum Betreiben mehrerer Baumaschinen sowie eine verbesserte Baumaschine zu schaffen, die Nachteile des Standes der Technik vermeidet und Letzteren in vorteilhafter Weise weiterbildet. Insbesondere soll eine einfach einzurichtende und auch auf vorhandenen Baumaschinen einfach nachrüstbare Anti-Kollisionseinrichtung geschaffen werden, die drohende Kollisionen verlässlich verhindert bzw. davor warnt und auch nur temporär im Bauablauf befindliche Maschinen berücksichtigen kann.

Erfindungsgemäß wird die genannte Aufgabe durch ein Verfahren gemäß Anspruch 1, eine Anti-Kollisionseinrichtung gemäß Anspruch 7 sowie eine Baumaschine gemäß Anspruch 11 gelöst. Bevorzugte Ausgestaltungen der Erfindung sind Gegenstand der abhängigen Ansprüche.

Es wird also vorgeschlagen, die Baumaschinen untereinander Ultrabreitbandsignale austauschen zu lassen und aus den Laufzeiten der Ultrabreitbandsignale drohende Kollisionen zu bestimmen. Erfindungsgemäß werden auf mehreren Baumaschinen Ultrabreitband-Sende-/Empfangseinrichtungen angebracht, wobei die auf den mehreren Baumaschinen angebrachten Ultrabreitband-Sende-/Empfangseinrichtungen Ultrabreitbandsignale austauschen, die Laufzeit der Ultrabreitbandsignale gemessen und aus den genannten Laufzeiten drohende Kollisionen bestimmt werden.

Durch die Verwendung der Ultrabreitbandsender und -empfänger können bestehende Baumaschinen einfach nachgerüstet werden, ohne dass ein aufwendiges Anlernen spezieller Antikollisionssysteme notwendig wäre. Aus der Laufzeit der zwischen den Baumaschinen ausgetauschten Ultrabreitbandsignalen lässt sich der Abstand der Baumaschinen voneinander und eine gefährliche Annäherung der Baumaschinen aneinander bestimmen, sodass die Antikollisionseinrichtung eine Bewegung zumindest einer Baumaschine ändern, insbesondere verlangsamen oder stoppen kann, oder zumindest ein Warnsignal abgeben kann, um den Maschinenführer auf die drohende Kollision aufmerksam zu machen.

Durch die Ultrabreitbandsignale können mehrere Baumaschinen auch verschiedenen Typs miteinander stabil kommunizieren, ohne dass Empfangsstörungen eine verlässliche Kollisionsbestimmung beeinträchtigen würden. Zudem sind keine speziellen Abstimmungsmaßnahmen zum Abstimmen der Maschinen aufeinander nötig, um die Antikollisionseinrichtung betreiben zu können.

Die Ultrabreitband-Sende-/Empfangseinrichtungen können Ultrabreitbandsignale in einem großen Frequenzbereich mit einer Bandbreite von beispielsweise mindestens 500 MHz oder von mindestens 20% des Mittelwerts von unterer und oberer Grenzfrequenz des genutzten Frequenzbandes nutzen. Vorteilhafterweise können die Ultrabreitbandsignale auch eine Bandbreite von mindestens 25% oder mindestens 30% der Mittenfrequenz aufweisen. Beträgt die Mittenfrequenz, d.h. der Mittelwert zwischen unterer und oberer Grenzfrequenz der Bandbreite, beispielsweise 2 GHz, kann die Bandbreite 500 MHz oder mehr betragen.

In Weiterbildung der Erfindung können die Ultrabreitbandsignale grundsätzlich eine Bandbreite von 100 MHz bis 10 GHz oder 500 MHz bis 5 GHz oder beispielsweise 800 MHz bis 1,2 GHz aufweisen.

Die Mittenfrequenz der Ultrabreitbandsignale kann vorteilhafterweise im Bereich von 1 GHz bis 20 GHz, beispielsweise 2 GHz bis 10 GHz oder zwischen 3 GHz und 10 GHz gewählt sein.

Ultrabreitbandsignale der genannten Bandbreite und der genannten Mittenfrequenzbereiche erreichen eine stabile Kommunikation und erlauben eine verlässliche Laufzeitbestimmung.

In Weiterbildung der Erfindung können an jeder der zumindest zwei Baumaschinen drei Ultrabreitband-Sende-/Empfangseinrichtungen vorgesehen sein, wobei die Position und/oder Annäherung der Baumaschinen relativ zueinander durch Trilateration aus den Laufzeiten der Ultrabreitbandsignale bestimmt werden kann.

Vorteilhafterweise können die genannten drei Ultrabreitband-Sende-/Empfangseinrichtungen in einer zumindest näherungsweise horizontalen bzw. liegenden Ebene angeordnet sein, um Annäherungen relevanter Baumaschinenteile in liegender bzw. horizontaler Richtung bestimmen zu können. Dabei spannen die drei Ultrabreitband-Sende-/Empfangseinrichtungen ein Dreieck auf, dass eine Spitze im Bereich der Auslegerspitze des Krans besitzt und sich zumindest näherungsweise parallel zur Auslegerlängsachse und zu einer liegenden Ebene erstreckt.

Sind die Baumaschinen beispielsweise zwei oder mehr als zwei Krane, können beispielsweise zwei Ultrabreitband-Sende-/Empfangseinrichtungen am Ausleger, beispielsweise einer Auslegerspitze und dem Anlenkbereich des Auslegers am Turm oder am Ende eines Gegenauslegers angebracht sein, wobei eine dritte Ultrabreitband-Sende-/Empfangseinrichtung gegenüber einer Verbindungsgeraden durch die beiden vorgenannten Ultrabreitband-Sende-/Empfangseinrichtungen in horizontaler bzw. liegender Richtung querversetzt angeordnet sein kann. Beispielsweise kann am Ausleger oder am Turm des Krans ein davon quer abstehender Querausleger oder -halter angebracht sein, der die dritte Ultrabreitband-Sende-/Empfangseinrichtung auf Höhe der beiden anderen Sende-Empfangseinrichtungen und quer von der genannten Verbindungslinie beabstandet hält.

Gegebenenfalls kann die Antikollisionseinrichtung auch auf das Winkel- oder Ausrichtungssignals eines Ausrichtungssensors zurückgreifen, das die Ausrichtung der jeweiligen Baumaschine angibt. Beispielsweise kann im Falle eines Krans das Drehstellungssignal eines Drehwerk-Encoders bzw. -Sensors berücksichtigt werden, das die Drehstellung des Drehwerks angibt, mittels dessen der Kran um eine aufrechte Achse verdreht werden kann.

Anhand des genannten Winkel- bzw. Ausrichtungssignals kann die Antikollisionseinrichtung insbesondere bestimmen, in welche Richtung der Ausrichter des Krans zeigt bzw. wie der Ausleger oder ein anderes kollisionsrelevantes Bauteil der Baumaschine relativ zu einer oder mehreren anderen Baumaschinen orientiert ist.

Bei Verwendung eines solchen Winkel- bzw. Ausrichtungssignals kann es ausreichend sein, an der Baumaschine nur zwei Ultrabreitband-Sende-/Empfangseinrichtungen anzubringen. Die Antikollisionseinrichtung kann die Position der Baumaschinen relativ zueinander und/oder deren Annäherung aneinander mittels Bilateration aus den bestimmten Laufzeiten der Ultrabreitbandsignale bestimmen, die die in diesem Fall nur zwei Ultrabreitband-Sende-/Empfangseinrichtungen pro Baumaschine miteinander austauschen, wobei zusätzlich das genannte Winkel- und/oder Ausrichtungssignal herangezogen werden kann, um Doppeldeutigkeiten bei der per Bilateration Positionsbestimmung zu eliminieren bzw. die Stellungen und Annäherungen eindeutig zu bestimmen.

Vorteilhafterweise können auch bei nur zwei Ultrabreitband-Sende-/Empfangseinrichtungen die beiden genannten Ultrabreitband-Sende-/Empfangseinrichtungen in einer liegenden bzw. zumindest näherungsweise horizontalen Ebene an der jeweiligen Baumaschine angeordnet sein. Ist die Baumaschine beispielsweise ein Kran, können die beiden Ultrabreitband-Sende-/Empfangseinrichtungen beispielsweise an gegenüberliegenden Endabschnitten des Auslegers des Krans angebracht sein.

Die Auswertung der Ultrabreitbandsignale bzw. der gemessenen oder in anderer Weise bestimmten Laufzeiten der ausgetauschten Ultrabreitbandsignale kann in Weiterbildung der Erfindung durch eine jeweilige Antikollisionseinrichtung an einer jeweiligen Baumaschine, insbesondere an einem jeweiligen Kran ausgeführt werden, wobei die Antikollisionseinrichtung beispielsweise ein Modul der Kransteuerung bzw. der Baumaschinensteuerung sein kann und mittels eines Software-Bausteins in einer Rechnereinheit implementiert sein kann.

Alternativ oder zusätzlich kann die Antikollisionseinrichtung aber auch eine zentrale Auswerteeinrichtung aufweisen, an die die Laufzeiten der zwischen den Ultrabreitband-Sende-/Empfangseinrichtungen der Baumaschinen ausgetauschten Ultrabreitbandsignale und/oder daraus abgeleitete Abstände der Sende-/Empfangseinrichtungen auch auf eine zentrale Auswerteeinrichtung übertragen werden, die beispielsweise an einer als Master fungierenden Baumaschine vorgesehen oder auch Teil eines Baustellenleitrechners sein kann. Die genannte zentrale Auswerteeinrichtung kann eine Kollisionsprüfung durchführen und bei Bedarf eine Kollisionswarnung an die betroffenen Baumaschinen übermitteln, deren Maschinensteuervorrichtung dann auf die Kollisionswarnung der zentralen Auswerteeinrichtung in vorbestimmter Weise reagieren kann, beispielsweise die annähernde Bewegung verlangsamen und/oder abändern und/oder stoppen.

Die Erfindung wird nachfolgend anhand bevorzugter Ausführungsbeispiele und zugehörigen Zeichnungen näher erläutert. In den Zeichnungen zeigen:
- Fig. 1:: eine Seitenansicht zweier Baumaschinen in Form von Turmdrehkranen, deren Arbeitsbereiche sich überlappen, wobei an jedem Kran drei Ultrabreitband-Sende-/Empfangseinrichtungen vorgesehen sind,
- Fig. 2:: eine Draufsicht auf die beiden Krane aus Fig. 1, die die Anordnung der Ultrabreitband-Sende-/Empfangseinrichtungen entlang der Kranausleger und an einem davon auskragenden Querausleger sowie die Trilateration mittels Ultrabreitband-basierter Entfernungsmessungen zeigt,
- Fig. 3:: eine Seitenansicht zweier Krane, die einen überlappenden Arbeitsbereich haben und jeweils mit nur zwei Ultrabreitband-Sende-/Empfangseinrichtungen sowie einer zusätzlichen Drehstellungssensorik versehen sind, um kollisionsrelevante Annäherungen mittels Bilateration anhand Ultrabreitband-basierter Entfernungsmessungen zwischen den Sende- und /Empfangseinrichtungen sowie ferner unter Zuhilfenahme eines Ausrichtungssignals der Ausrichtungssensorik zu bestimmen, und
- Fig. 4:: eine Draufsicht auf die beiden Krane aus Fig. 3, die die Anordnung der jeweils zwei Ultrabreitband-Sende-/Empfangseinrichtungen entlang der Ausleger der Krane und die Auflösung der Doppeldeutigkeit der Positionsbestimmung anhand des Winkel bzw. Drehrichtungssignals verdeutlicht.

Wie die Figuren zeigen, kann die Anti-Kollisionseinrichtung 1 mehrere Baumaschinen beispielsweise in Form von Kranen 2, 3 überwachen und vor Kollisionen bewahren, wobei die genannten Krane 2, 3 beispielsweise in Form von Turmdrehkranen ausgebildet sein können, die jeweils einen Ausleger 4 umfassen, der liegend angeordnet und auf einem Turm 5 abgestützt sein kann. Die Krane 2, 3 können aber auch in Form anderer Krantypen wie beispielsweise eines zusammenklappbaren Schnelleinsatzkrans oder eines Teleskopauslegerkrans ausgebildet sein.

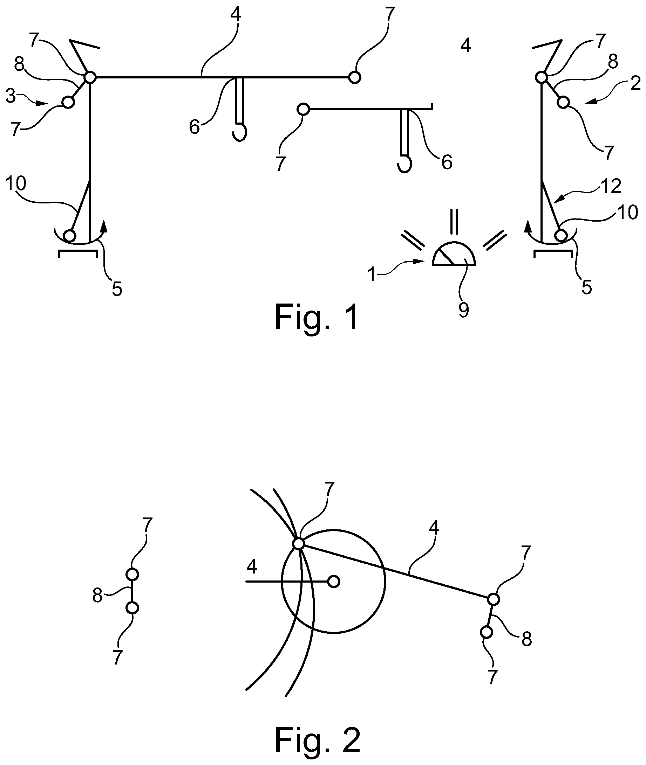

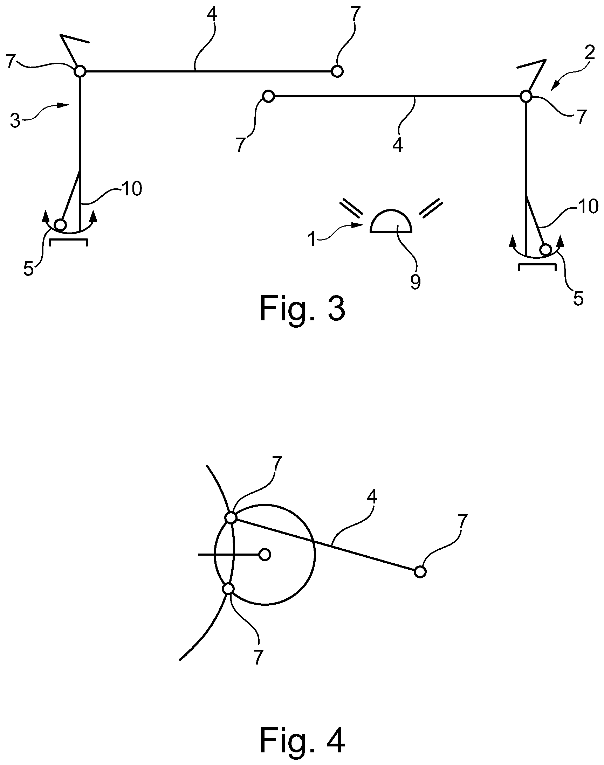

In an sich bekannter Weise können die beiden Krane 2, 3 jeweils mittels eines Drehwerk 5 um eine aufrechte Achse verdreht werden, so dass ihre Ausleger 4 jeweils einen kreis- bzw. ringförmigen Arbeitsbereich überstreichen können, wobei sich die genannten Arbeitsbereiche der Krane 2, 3 in einem Kollisionsbereich überschneiden können, vgl. Fig. 2 und Fig. 4. Auch wenn die Ausleger 4 in unterschiedlicher Höhe angeordnet sein können, kann sich ein entsprechender Kollisionsbereich durch die von den Auslegern 4 ablaufenden Hubseile ergeben, die den Lasthaken tragen und beispielsweise von einer Laufkatze 6 ablaufen können, die entlang des jeweiligen Auslegers 4 verfahrbar sein kann.

Wie die Figuren 1 und 2 zeigen, kann die Anti-Kollisionseinrichtung 1 an jedem Kran 2, 3 mehrere Ultrabreitband-Sende-/Empfangseinrichtungen und Ultrabreitbandempfangseinrichtungen aufweisen. Die genannten Ultrabreitbandsende- und Ultrabreitbandempfangseinrichtungen können separat voneinander ausgebildet und angeordnet sein, wobei dies jedoch nicht zwingend erforderlich ist. Die genannten Ultrabreitband-Sende- und -Empfangseinrichtungen können auch zu einem Ultrabreitbandmodul bzw. -baustein zusammengefasst sein, beispielsweise in einem gemeinsamen operativen Aufbau mit einer Ultrabreitbandantenneneinrichtung integriert sein, wobei die genannte Antenneneinheit beispielsweise regelmäßig vom Sende- zum Empfangsmodus und zurück wechseln kann.

Wie die Figuren 1 und 2 zeigen, sind die Ultrabreitband-Sende-/Empfangseinrichtungen 7 an den Auslegern 4 verteilt angeordnet, beispielsweise im Bereich einer Auslegerspitze und im Bereich einer Auslegeranlenkung am Turm. Zusätzlich zu zwei am Ausleger 4 beabstandet angebrachten Ultrabreitband-Sende-/Empfangseinrichtungen 7 ist an den Kranen 2, 3 jeweils zumindest eine weitere Ultrabreitband-Sende-/Empfangseinrichtung 7 angeordnet, die in der gleichen Höhe wie die beiden anderen Sende-/Empfangseinrichtungen 7 angeordnet sein und von einer Verbindungslinie zwischen den beiden vorgenannten Sende-/Empfangseinrichtungen 7 am Ausleger 4 quer beabstandet angeordnet sein kann, beispielsweise durch einen Querausleger 8, der beispielsweise am Turm oder am Ausleger 4 selbst angebracht sein kann und davon quer, liegend auskragt. Ungeachtet der tatsächlichen Befestigung bzw. Halterung kann es vorteilhaft sein, wenn die drei Ultrabreitband-Sende-/Empfangseinrichtungen 7 eines jeden Krans 2, 3 in einer liegenden Ebene angeordnet sind und/oder ein Dreieck aufspannen, vgl. Figuren 1 und 2.

Die Ultrabreitband-Sende-/Empfangseinrichtungen 7 kommunizieren miteinander und tauschen Ultrabreitbandsignale aus, so dass aus den Laufzeiten der Ultrabreitbandsignale die Abstände der Sende-/Empfangseinrichtungen 7 und damit die Beabstandung der Krane 2, 3 und insbesondere die Beabstandung deren Ausleger 4 voneinander bestimmt werden kann.

Dabei können auch die Ultrabreitband-Sende-/Empfangseinrichtungen 7, die auf demselben Kran 2 oder 3 angeordnet sind, miteinander kommunizieren, so dass die Laufzeiten als Referenzwerte dienen können, die die bekannten Abstände der Sende-/Empfangseinrichtungen 7 auf demselben Kran wiedergeben.

Aus den zwischen den Kranen 2, 3 ausgetauschten Ultrabreitbandsignalen und deren Laufzeiten kann die Anti-Kollisionseinrichtung 1 die Position der Krane 2, 3 und insbesondere die Position deren Ausleger 4 relativ zueinander bestimmen. Insbesondere kann die Anti-Kollisionseinrichtung 1 auch Annäherungen der Krane 2, 3, insbesondere der Ausleger 4, aufeinander zu oder allgemein Relativbewegungen zwischen den relevanten Bauteilen der Krane 2, 3 bestimmen.

Die Anti-Kollisionseinrichtung 1 kann einen Zentralrechner 9 umfassen, der beispielsweise an einem der in diesem Fall als Master fungierenden Krane vorgesehen sein kann, beispielsweise in dessen Kransteuerung integriert sein kann. Alternativ oder zusätzlich kann aber auch ein von den Kranen 2, 3 bzw. den Baumaschinen separater Zentralrechner 9 Verwendung finden, an den die Laufzeiten bzw. die hieraus ermittelten Abstände zwischen den Ultrabreitband-Sende-/Empfangseinrichtungen 7 bzw. der Krane 2, 3 bzw. der Ausleger 4 übermittelt werden können, so dass der separate Zentralrechner 9, der beispielsweise in einen Baustellenleitrechner integriert bzw. damit verbunden sein kann, kollisionsgefährdende Maschinenbewegungen bestimmen und ein entsprechendes Warnsignal an die Baumaschinen bzw. die Krane 2, 3 übermitteln kann.

Die Anti-Kollisionseinrichtung 1, insbesondere deren Zentralrechner 9 kann dazu ausgebildet sein, die Relativpositionen der Krane 2, 3 insbesondere von deren Auslegern 4, bzw. der daran angebrachten Ultrabreitband-Sende-/Empfangseinrichtungen 7 durch Trilateration anhand der Laufzeiten bestimmen und anhand der Änderungen der Relativpositionen Annäherungen bestimmen, die kollisionsgefährdend sind.

Wie Fig. 2 zeigt, kann die Trilateration mittels der seitlich quer vom Ausleger 4 abstehenden bzw. seitlich neben dem Turm angebrachten Ultrabreitband-Sende-/Empfangseinrichtung 7 ausgeführt werden, wobei die in Fig. 2 eingetragenen Kreise ultrabreitbandbasierte Entfernungsmessungen darstellen. Durch die beiden hinteren im Bereich des Auslegeranlenkpunkts angebrachten, quer voneinander beabstandeten Ultrabreitband-Sende-/Empfangseinrichtungen 7 kann die Position der Ultrabreitband-Sende-/Empfangseinrichtung 7 im Bereich der Auslegerspitze des anderen Krans eindeutig bestimmt werden.

Wie die Figuren 3 und 4 zeigen, kann es auch ausreichend sein, an den beiden Kranen 2, 3 bzw. den entsprechenden Baumaschinen nur jeweils zwei Ultrabreitband-Sende-/Empfangseinrichtungen 7 anzubringen, wobei im Falle von Kranen 2, 3 die Sende-/Empfangseinrichtungen 7 beispielsweise im Bereich der Auslegerspitze und im Bereich des Anlenkpunkts des Auslegers 4 angebracht sein können, vgl. Fig. 3.

Mit nur zwei Ultrabreitband-Sende-/Empfangseinrichtungen 7 kann die relative Position des im Bereich der Auslegerspitze des anderen Krans angebrachte Ultrabreitband-Sende-/Empfangseinrichtung 7 jedoch nur zweideutig bestimmt werden. Es ergibt sich eine Doppeldeutigkeit dahingehend, dass die Auslegerspitze des anderen Krans 3 rechts oder links vom Ausleger 4 des ersten Krans 2 sein kann, vgl. Fig. 4, und trotzdem denselben Abstand von jeder der beiden Ultrabreitband-Sende-/Empfangseinrichtungen 7 des genannten ersten Krans 2 hat.

Um diese Doppeldeutigkeit aufzulösen, kann die Anti-Kollisionseinrichtung 1 auf ein Winkel- bzw. Ausrichtungssignal zurückgreifen, das die Winkelstellung bzw. die Ausrichtung der beiden Krane 2, 3 zueinander angibt. Beispielsweise kann die Anti-Kollisionseinrichtung 1 zwei Winkelsignale berücksichtigen, die die Drehstellung der beiden Krane 2, 3 angeben und somit die relative Winkelstellung der beiden Krane 2, 3 relativ zueinander charakterisieren.

Die genannten Winkelsignale können beispielsweise von Entcodern bzw. Sensoren kommen, die die Drehwerksstellung der beiden Krane jeweils angeben.

## Patentansprüche

1. Verfahren zum Betreiben mehrerer Baumaschinen, insbesondere in Form von Kranen (2, 3), deren Bewegungen von einer Anti-Kollisionseinrichtung (1) auf drohende Kollisionen überwacht werden, wobei auf den mehreren Baumaschinen angebrachte Ultrabreitband-Sende-/Empfangseinrichtungen (7) Ultrabreitbandsignale austauschen, **dadurch gekennzeichnet, dass** die Laufzeiten der Ultrabreitbandsignale zwischen den Baumaschinen bestimmt und aus den Laufzeiten der Ultrabreitbandsignale drohende Kollisionen bestimmt werden, wobei an jeder Baumaschine zumindest drei Ultrabreitband-Sende-/Empfangseinrichtungen (7) vorgesehen sind, von denen ein Dreieck in einer liegenden Ebene mit einer Spitze im Bereich einer Auslegerspitze, aufgespannt wird, und die Positionen und/oder Annäherungen der Baumaschinen relativ zueinander durch Trilateration auf Basis der Laufzeiten der zwischen den Ultrabreitband-Sende-/Empfangseinrichtungen (7) ausgetauschten Ultrabreitbandsignale bestimmt wird.

2. Verfahren nach dem vorhergehenden Anspruch, wobei Ultrabreitbandsignale mit einer Bandbreite von mehr als 20% oder mehr als 25% oder mehr als 35% der Mittelfrequenz ausgetauscht werden.

3. Verfahren nach einem der vorhergehenden Ansprüche, wobei Ultrabreitbandsignale mit einer Bandbreite von mehr als 500 MHz oder mehr als 1 GHz ausgetauscht werden.

4. Verfahren nach einem der vorhergehenden Ansprüche, wobei Ultrabreitbandsignale mit einer Mittelfrequenz im Bereich von 500 MHz bis 10 GHz oder 1 GHz bis 10 GHz oder 3 GHz bis 8 GHz ausgetauscht werden.

5. Verfahren nach einem der vorhergehenden Ansprüche, wobei von der Antikollisionseinrichtung (1) bei drohenden Kollisionen ein Warnsignal abgegeben und/oder in die Steuerung zumindest einer der Baumaschinen eingegriffen, insbesondere deren Bewegung verändert und/oder abgebremst und/oder stillgesetzt wird.

6. Verfahren nach einem der vorhergehenden Ansprüche, wobei die Laufzeiten der Ultrabreitband-Signale von Laufzeit-Bestimmungseinrichtungen an den Baumaschinen bestimmt und die bestimmten Laufzeiten und/oder daraus abgeleitete Abstände der Baumaschinen an eine gemeinsame, zentrale Auswerteeinrichtung (9) übermittelt werde, von der anhand der übermittelten Laufzeiten und/oder Abstände drohende Kollisionen bestimmt und Kollsisions-Warnsignale an die betroffene Baumaschine übermittelt werden.

7. Anti-Kollisionseinrichtung zum Überwachen und Vermeiden drohender Kollisionen zwischen zwei Baumaschinen, insbesondere in Form von Kranen (2, 3), umfassend mehreren Ultrabreitband-Sende-/Empfangseinrichtungen (7) an jeder der Baumaschinen zum Austauschen von Ultrabreitbandsignalen, **gekennzeichnet durch** eine LaufzeitBestimmungseinrichtung zum Bestimmen der Laufzeiten der zwischen den Baumaschinen ausgetauschten Ultrabreitbandsignale sowie einer Positions- und/oder Annäherungs-Bestimmungseinrichtung zum Bestimmen der Position der Baumaschinen relativ zueinander und/oder der Annäherung der Baumaschinen aufeinanderzu anhand der bestimmten Laufzeiten der Ultrabreitbandsignale, wobei an jeder Baumaschine zumindest drei Ultrabreitband-Sende-/Empfangseinrichtungen (7) vorgesehen sind, die zumindest drei Ultrabreitband-Sende-/Empfangseinrichtungen (7) ein Dreieck in einer liegenden Ebene mit einer Spitze im Bereich einer Auslegerspitze aufspannen, und die Positions- und/oder Annäherungsbestimmungseinrichtung (11) dazu ausgebildet ist, die Position und/oder Annäherung der Baumaschinen mittels Trilateration auf Basis der Laufzeiten der Ultrabreitbandsignale zu bestimmen.

8. Anti-Kollisionseinrichtung nach dem vorhergehenden Anspruch, wobei zwei Ultrabreitband-Sende-/Empfangseinrichtungen (7) im Bereich eines Auslegers (4) der Baumaschine und eine weitere Ultrabreitband-Sende-/Empfangseinrichtung (7) quer vom Ausleger (4) beabstandet angeordnet ist.

9. Anti-Kollisionseinrichtung nach dem vorhergehenden Anspruch, wobei eine Ultrabreitband-Sende-/Empfangseinrichtung (7) im Bereich einer Auslegerspitze, eine weitere Ultrabreitband-Sende-/Empfangseinrichtung (7) im Bereich einer Anlenkung des Auslegers (4) und eine weitere Ultrabreitband-Sende-/Empfangseinrichtung (7) an einem relativ zum Ausleger (4) quer auskragenden Querausleger (8) angebracht ist.

10. Anti-Kollisionseinrichtung nach einem der vorhergehenden Ansprüche, wobei eine zentrale Auswerte-Einrichtung (9) zum Auswerten der Laufzeiten der Ultrabreitbandsignale vorgesehen ist, die an einer der Baumaschinen oder separat von allen Baumaschinen vorgesehen ist.

11. Baumaschine, insbesondere Kran, umfassend eine Anti-Kollisionsvorrichtung zum Überwachen und Vermeiden drohender Kollisionen mit einer anderen Baumaschine nach einem der vorhergehenden Ansprüche 7-10, wobei die Anti-Kollisionsvorrichtung (1) mehrere Ultrabreitband-Sende-/Empfangseinrichtungen (7) aufweist, die voneinander beabstandet angeordnet und zum Austausch von Ultrabreitbandsignalen mit Ultrabreitband-Sende-/Empfangseinrichtungen (7) an der anderen Baumaschine vorgesehen sind.

12. Baumaschine nach dem vorhergehenden Anspruch, wobei die Anti-Kollisionseinrichtung (1) eine Laufzeitbestimmungseinrichtung zum Bestimmen der Laufzeiten der mit der anderen Baumaschine ausgetauschten Ultrabreitbandsignale und eine Positionsbestimmungseinrichtung (11) zum Bestimmen der Position relativ zu der anderen Baumaschine auf Basis der Laufzeiten der Ultrabreitbandsignale aufweist.

## Claims

1. Method for operating several construction machines, in particular in the form of cranes (2, 3), the movements of which are monitored for imminent collisions by an anti-collision device (1), wherein ultra-wideband transceiver devices (7) mounted on the several construction machines exchange ultra-wideband signals, **characterized in that** the propagation times of the ultra-wideband signals between the construction machines are determined and imminent collisions are determined from the propagation times of the ultra-wideband signals, wherein at least three ultra-wideband transceiver devices (7) are provided on each construction machine, from which a triangle is spanned in a horizontal plane with an apex in the region of a boom tip, and the positions and/or approaches of the construction machines relative to one another are determined by trilateration on the basis of the propagation times of the ultra-wideband signals exchanged between the ultra-wideband transceiver devices (7).

2. Method according to the preceding claim, wherein ultra-wideband signals having a bandwidth of more than 20% or more than 25% or more than 35% of the center frequency are exchanged.

3. Method according to one of the preceding claims, wherein ultra-wideband signals having a bandwidth of more than 500 MHz or more than 1 GHz are exchanged.

4. Method according to one of the preceding claims, wherein ultra-wideband signals having a center frequency in the range of 500 MHz to 10 GHz or 1 GHz to 10 GHz or 3 GHz to 8 GHz are exchanged.

5. Method according to one of the preceding claims, wherein, in the event of imminent collisions, a warning signal is emitted by the anti-collision device (1) and/or the control of at least one of the construction machines is intervened in, in particular the movement thereof is changed and/or braked and/or stopped.

6. Method according to one of the preceding claims, wherein the propagation times of the ultra-wideband signals are determined by propagation-time determination devices on the construction machines and the determined propagation times and/or distances of the construction machines derived therefrom are transmitted to a common, central evaluation device (9), by which imminent collisions are determined on the basis of the transmitted propagation times and/or distances and collision warning signals are transmitted to the affected construction machine.

7. Anti-collision device for monitoring and avoiding imminent collisions between two construction machines, in particular in the form of cranes (2, 3), comprising several ultra-wideband transceiver devices (7) on each of the construction machines for exchanging ultra-wideband signals, **characterized by** a propagation-time determination device for determining the propagation times of the ultra-wideband signals exchanged between the construction machines as well as a position- and/or approach-determination device for determining the position of the construction machines relative to one another and/or the approach of the construction machines toward one another on the basis of the determined propagation times of the ultra-wideband signals, wherein at least three ultra-wideband transceiver devices (7) are provided on each construction machine, the at least three ultra-wideband transceiver devices (7) span a triangle in a horizontal plane with an apex in the region of a boom tip, and the position- and/or approach-determination device (11) is configured to determine the position and/or approach of the construction machines by means of trilateration on the basis of the propagation times of the ultra-wideband signals.

8. Anti-collision device according to the preceding claim, wherein two ultra-wideband transceiver devices (7) are arranged in the region of a boom (4) of the construction machine and a further ultra-wideband transceiver device (7) is arranged spaced transversely from the boom (4).

9. Anti-collision device according to the preceding claim, wherein one ultra-wideband transceiver device (7) is mounted in the region of a boom tip, a further ultra-wideband transceiver device (7) in the region of an articulation of the boom (4) and a further ultra-wideband transceiver device (7) on a transverse boom (8) projecting transversely relative to the boom (4).

10. Anti-collision device according to one of the preceding claims, wherein a central evaluation device (9) for evaluating the propagation times of the ultra-wideband signals is provided, which is provided on one of the construction machines or separately from all construction machines.

11. Construction machine, in particular crane, comprising an anti-collision device for monitoring and avoiding imminent collisions with another construction machine according to one of the preceding claims 7-10, wherein the anti-collision device (1) has several ultra-wideband transceiver devices (7) which are arranged spaced apart from one another and are provided for exchanging ultra-wideband signals with ultra-wideband transceiver devices (7) on the other construction machine.

12. Construction machine according to the preceding claim, wherein the anti-collision device (1) has a propagation-time determination device for determining the propagation times of the ultra-wideband signals exchanged with the other construction machine and a position-determination device (11) for determining the position relative to the other construction machine on the basis of the propagation times of the ultra-wideband signals.

## Revendications

1. Procédé pour faire fonctionner plusieurs engins de chantier, en particulier sous la forme de grues (2, 3), dont les mouvements sont surveillés par un dispositif anti-collision (1) quant à des collisions imminentes, dans lequel des dispositifs émetteurs/récepteurs à ultra-large bande (7) montés sur les plusieurs engins de chantier échangent des signaux ultra-large bande, **caractérisé en ce que** les temps de propagation des signaux ultra-large bande entre les engins de chantier sont déterminés et que des collisions imminentes sont déterminées à partir des temps de propagation des signaux ultra-large bande, dans lequel sur chaque engin de chantier au moins trois dispositifs émetteurs/récepteurs à ultra-large bande (7) sont prévus, à partir desquels un triangle est tendu dans un plan couché avec un sommet dans la zone d'une pointe de flèche, et les positions et/ou les rapprochements des engins de chantier les uns par rapport aux autres sont déterminés par trilatération sur la base des temps de propagation des signaux ultra-large bande échangés entre les dispositifs émetteurs/récepteurs à ultra-large bande (7).

2. Procédé selon la revendication précédente, dans lequel des signaux ultra-large bande ayant une largeur de bande de plus de 20 % ou de plus de 25 % ou de plus de 35 % de la fréquence centrale sont échangés.

3. Procédé selon l'une des revendications précédentes, dans lequel des signaux ultra-large bande ayant une largeur de bande de plus de 500 MHz ou de plus de 1 GHz sont échangés.

4. Procédé selon l'une des revendications précédentes, dans lequel des signaux ultra-large bande ayant une fréquence centrale dans la plage de 500 MHz à 10 GHz ou de 1 GHz à 10 GHz ou de 3 GHz à 8 GHz sont échangés.

5. Procédé selon l'une des revendications précédentes, dans lequel, en cas de collisions imminentes, un signal d'avertissement est émis par le dispositif anti-collision (1) et/ou il est intervenu dans la commande d'au moins l'un des engins de chantier, en particulier le mouvement de celui-ci est modifié et/ou freiné et/ou arrêté.

6. Procédé selon l'une des revendications précédentes, dans lequel les temps de propagation des signaux ultra-large bande sont déterminés par des dispositifs de détermination de temps de propagation sur les engins de chantier et les temps de propagation déterminés et/ou les distances des engins de chantier qui en sont déduites sont transmis à un dispositif d'évaluation central commun (9), par lequel des collisions imminentes sont déterminées à l'aide des temps de propagation et/ou des distances transmis et des signaux d'avertissement de collision sont transmis à l'engin de chantier concerné.

7. Dispositif anti-collision pour surveiller et éviter des collisions imminentes entre deux engins de chantier, en particulier sous la forme de grues (2, 3), comprenant plusieurs dispositifs émetteurs/récepteurs à ultra-large bande (7) sur chacun des engins de chantier pour échanger des signaux ultra-large bande, **caractérisé par** un dispositif de détermination de temps de propagation pour déterminer les temps de propagation des signaux ultra-large bande échangés entre les engins de chantier ainsi qu'un dispositif de détermination de position et/ou de rapprochement pour déterminer la position des engins de chantier les uns par rapport aux autres et/ou le rapprochement des engins de chantier les uns vers les autres à l'aide des temps de propagation déterminés des signaux ultra-large bande, dans lequel sur chaque engin de chantier au moins trois dispositifs émetteurs/récepteurs à ultra-large bande (7) sont prévus, les au moins trois dispositifs émetteurs/récepteurs à ultra-large bande (7) tendent un triangle dans un plan couché avec un sommet dans la zone d'une pointe de flèche, et le dispositif de détermination de position et/ou de rapprochement (11) est conçu pour déterminer la position et/ou le rapprochement des engins de chantier au moyen d'une trilatération sur la base des temps de propagation des signaux ultra-large bande.

8. Dispositif anti-collision selon la revendication précédente, dans lequel deux dispositifs émetteurs/récepteurs à ultra-large bande (7) sont disposés dans la zone d'une flèche (4) de l'engin de chantier et un autre dispositif émetteur/récepteur à ultra-large bande (7) est disposé à distance transversalement de la flèche (4).

9. Dispositif anti-collision selon la revendication précédente, dans lequel un dispositif émetteur/récepteur à ultra-large bande (7) est monté dans la zone d'une pointe de flèche, un autre dispositif émetteur/récepteur à ultra-large bande (7) dans la zone d'une articulation de la flèche (4) et un autre dispositif émetteur/récepteur à ultra-large bande (7) sur une flèche transversale (8) faisant saillie transversalement par rapport à la flèche (4).

10. Dispositif anti-collision selon l'une des revendications précédentes, dans lequel un dispositif d'évaluation central (9) pour évaluer les temps de propagation des signaux ultra-large bande est prévu, lequel est prévu sur l'un des engins de chantier ou séparément de tous les engins de chantier.

11. Engin de chantier, en particulier grue, comprenant un dispositif anti-collision pour surveiller et éviter des collisions imminentes avec un autre engin de chantier selon l'une des revendications précédentes 7 à 10, dans lequel le dispositif anti-collision (1) présente plusieurs dispositifs émetteurs/récepteurs à ultra-large bande (7) qui sont disposés à distance les uns des autres et sont prévus pour échanger des signaux ultra-large bande avec des dispositifs émetteurs/récepteurs à ultra-large bande (7) sur l'autre engin de chantier.

12. Engin de chantier selon la revendication précédente, dans lequel le dispositif anti-collision (1) présente un dispositif de détermination de temps de propagation pour déterminer les temps de propagation des signaux ultra-large bande échangés avec l'autre engin de chantier et un dispositif de détermination de position (11) pour déterminer la position par rapport à l'autre engin de chantier sur la base des temps de propagation des signaux ultra-large bande.
